# EUROPÄISCHE PATENTANMELDUNG

(11) **EP 4 478 572 A1**
(43) Veröffentlichungstag der Anmeldung: **18.12.2024**
(21) Anmeldenummer: 24181753.5
(22) Anmeldetag: 12.06.2024
(51) Int. Cl.: H02J 3/30, H02J 3/38, H02J 7/00, H02J 13/00, H02J 3/32

(54) **STECKERSOLARGERÄT UND VERFAHREN ZUM BETRIEB EINES STECKERSOLARGERÄTES**

(30) Priorität: 13.06.2023 DE 102023115405; 01.09.2023 DE 102023123662
(71) Anmelder: Sorge, Nico, 06118 Halle (DE)
(72) Erfinder: Sorge, Nico, 06118 Halle (DE)
(74) Vertreter: Dantz, Dirk

(57) **Zusammenfassung**

Die Erfindung betrifft ein Steckersolargerät zur Einspeisung von elektrischer Leistung in ein Haushaltsstromnetz und ein Verfahren zum Betrieb eines Steckersolargerätes zur Einspeisung von elektrischer Leistung in ein Haushaltsstromnetz umfassend eine Photovoltaikeinheit (PV-Einheit), einen Wechselrichter, einen Anschlussstecker, eine Stromleistungsmesseinheit und eine Steuerung, wobei die Stromleistungsmesseinheit dafür vorgesehen und dafür geeignet ist, den gesamten Stromleistungsverbrauch und/oder den vollständigen Stromleistungsbedarf des Haushaltes zu ermitteln.

## Beschreibung

Die Erfindung betrifft ein Steckersolargerät zur Einspeisung von elektrischer Leistung in ein Haushaltsstromnetz und ein Verfahren zum Betrieb eines Steckersolargerätes zur Einspeisung von elektrischer Leistung in ein Haushaltsstromnetz umfassend eine Photovoltaikeinheit (PV-Einheit), einen Wechselrichter, einen Anschlussstecker, eine Stromleistungsmesseinheit und eine Steuerung, wobei die Stromleistungsmesseinheit dafür vorgesehen und dafür geeignet ist, den gesamten Stromleistungsverbrauch und/oder den vollständigen Stromleistungsbedarf des Haushaltes zu ermitteln.

### Stand der Technik

Steckersolargeräte, auch als Balkonsolarkraftwerke bezeichnet, können ohne großen technischen Aufwand auf Balkonen, Flachdächern, Gärten und anderen Orten mit geeigneter Sonneneinstrahlung und einer verfügbaren Steckdose aufgestellt bzw. montiert werden. Namensgebend für diese Technologie ist die direkte Einspeisung von Photovoltaik-Strom (PV-Strom) in den Haushaltsstromkreis mithilfe eines Steckers. Ein Nutzer kauft das Steckersolargerät und ordnet Solarpanel und Wechselrichter an. Um den Strom einzuspeisen, wird der Wechselrichter an eine herkömmliche Schukosteckdose angeschlossen. Steckersolargeräte sind attraktiv für alle Endkunden, die sich selbst zumindest teilweise mit Strom versorgen wollen.

Weil ein Steckersolargerät Strom nicht speichert, gibt es überschüssig erzeugte elektrische Leistung, die der Haushalt nicht sofort verbraucht, ans öffentliche Stromnetz ab. Diese Überschüsse werden derzeit nicht vergütet. Die überschüssige elektrische Leistung kann in einem wiederaufladbaren Energiespeicher (Akku) gespeichert werden, aus dem die elektrische Energie z.B. während der Nachtstunden wieder entnommen und in das Haushaltsstromnetzwerk eingespeist werden kann.

Die Kombination von Steckersolargerät mit einem Akku ist bekannt. Bei diesen Steckersolargeräten wird allerdings die von den Solarpanels erzeugte elektrische Leistung von maximal beispielsweise derzeit 600 Watt in das Haushaltsstromnetzwerk eingespeist, überschüssig erzeugte elektrische Leistung wird in den Akku gespeist, der wiederum nachts und bei geringer Sonneneinstrahlung die gespeicherte elektrische Leistung in das Hausnetz einspeist. Es werden also lediglich Überschüsse des Steckersolargerätes gespeichert, die bei Bedarf aus dem Akku wieder abgegeben werden.

Ein Beispiel zeigt die Schrift CN 216215920 U: Das Steckersolargerät kann Strom zusammen mit kommerziellem Strom in einem Vernetzungsmodus liefern, das Steckersolargerät wird direkt an eine Last zur Verwendung unter den Bedingungen der Beleuchtung am Tag geliefert, das Steckersolargerät kann durch den kommerziellen Strom oder eine Batterie ergänzt werden, wenn die photovoltaische Stromversorgung unzureichend ist. Überschüssige elektrische Energie wird in die Batterie für den Standby-Betrieb geladen, nachdem die photovoltaische Stromerzeugung für die Last verwendet wurde, die elektrische Menge der Batterie und des kommerziellen Stroms werden für die Stromversorgung der Last zur gleichen Zeit in der Nacht verwendet, ein Teil der elektrischen Menge wird in der Batterie für die Notstromversorgung reserviert, und die Notstromversorgung von teilweisen kleinen Lasten wie Beleuchtung wird für die Bewohner bereitgestellt, nachdem der kommerzielle Strom abgeschaltet wurde.

Dieses vorgestellte Steckersolargerät weist den Nachteil auf, dass zum Aufladen des elektrischen Energiespeichers sowohl die vom Steckersolargerät erzeugte elektrische Leistung als auch Strom aus dem öffentlichen Stromnetz verwendet wird. Dieses System ist vorrangig für die Notstromversorgung z.B. für Büroeinrichtungen und Haushalte geeignet.

### Aufgabe

Es ist daher Aufgabe der vorliegenden Erfindung, ein Verfahren zum Betrieb eines Steckersolargerätes bereitzustellen, mit dem die Eigennutzung der durch das Steckersolargerät produzierten elektrischen Leistung optimiert wird.

Es ist ebenfalls Aufgabe der vorliegenden Erfindung, ein Steckersolargerät bereitzustellen, mit dem die Eigennutzung der durch das Steckersolargerät produzierten elektrischen Leistung optimiert wird.

Die Aufgabe wird mittels des erfindungsgemäßen Verfahrens zum Betrieb eines Steckersolargerätes zur Einspeisung von elektrischer Leistung in ein Haushaltsstromnetz gemäß Anspruch 1 gelöst. Weitere vorteilhafte Ausführungen der Erfindung sind in den Unteransprüchen dargelegt.

Das erfindungsgemäße Verfahren zum Betrieb eines Steckersolargerätes zur Einspeisung von elektrischer Leistung in ein Haushaltsstromnetz weist vier Verfahrensschritte auf: Im ersten Verfahrensschritt erfolgt ein Erzeugen einer Stromleistung mit einer Photovoltaik-Einheit eines Steckersolargerätes. Das Steckersolarkraftwerk weist dazu ein oder eine Mehrzahl von Photovoltaik-Modulen auf, die in Reihe und/oder parallel als Photovoltaik-Einheit geschaltet sind. Im zweiten Verfahrensschritt erfolgt ein Speichern der erzeugten Stromleistung in einer Stromspeicher-Einheit. Das Speichern der erzeugten elektrischen Leistung erfolgt optional so lange, bis die Stromspeicher-Einheit vollständig geladen ist.

Im dritten Verfahrensschritt erfolgt ein Messen der aktuellen Bezugs- und/oder des Verbrauchsstromleistung des Haushaltstromnetzes. Während des Betriebes des Steckersolargerätes erfasst die Stromleistungsmesseinheit mittels des Stromleistungsmessgerätes die aktuelle und vollständige Bezugs- und/oder Verbrauchsstromleistung des Haushaltstromnetzes aller im Haushaltstromnetz befindlichen Stromverbraucher. Die Erfassung der Bezugs- und/oder der Verbrauchsstromleistung erfolgt fortlaufend in einem einstellbaren Takt, z.B. 1 Sekunde.

Im vierten Verfahrensschritt erfolgt ein Einspeisen einer Stromleistung aus der Stromspeicher-Einheit über einen Wechselrichter. Erfindungsgemäß korrespondiert die Menge der eingespeisten Stromleistung mit der gemessenen Bezug- und/oder Verbrauchsstromleistung. Auf Grundlage der erfassten Bezugs- und/oder der Verbrauchsstromleistung des Haushaltstromnetzes die Stromspeicher-Einheit wird eine derartige Stromleistung als Gleichstrom an den Wechselrichter abgegeben, dass die Bezugs- und/oder die Verbrauchsstromleistung des Haushaltstromnetzes vollständig gedeckt ist. Der Wechselrichter wandelt den Gleichstrom der Stromspeicher-Einheit in einen Wechselstrom (in Deutschland mit 230V) um, über einen mit dem Wechselrichter verbundenen Anschlussstecker wird der Wechselstrom in die Standardhaushaltssteckdose des Haushaltsstromnetzes eingespeist.

Dadurch wird erreicht, dass so lange elektrische Energie aus der Stromspeicher-Einheit in das Haushaltstromnetz eingespeist wird, wie die Stromspeicher-Einheit über elektrische Energie verfügt. Durch eine geeignete Wahl der Peak-Leistung der Photovoltaikeinheit ist sichergestellt, dass in den Sonnenstunden des Tages die Stromspeicher-Einheit ständig geladen wird und damit auch in den sonnenlosen Stunden des Tages (z.B. in der Nacht, bewölkter Himmel etc.) elektrische Leistung in das Haushaltstromnetz abgibt. Die elektrische Leistung ist dabei dem Verbrauch der elektrischen Leistung des Haushaltsstromnetzes angepasst, d.h. es wird maximal nur so viel elektrische Leistung von der Stromspeicher-Einheit in das Haushaltstromnetz eingespeist, wie auch tatsächlich verbraucht wird. Damit ist sichergestellt, dass der Bedarf von elektrischer Leistung des Haushaltstromnetzes gedeckt ist, gleichzeitig möglichst wenig elektrische Leistung aus dem öffentlichen Stromnetz in das Haushaltstromnetz eingespeist wird.

In einer Weiterbildung der Erfindung wird die aktuelle Bezug- und oder Verbrauchsstromleistung mit einer Stromleistungsmesseinheit gemessen. In einer weiteren Ausführung der Erfindung weist die Stromleistungsmesseinheit mehrere Stromleistungsmessgeräte auf. Jedes der Stromleistungsmessgeräte ist optional an einem unterschiedlichen Ort des Haushaltsstromnetzes angeordnet. Damit ist die kontinuierliche Erfassung des Stromleistungsverbrauchs und/oder des vollständigen Stromleistungsbedarfs in einstellbaren Zeitintervallen des Haushaltsstromnetzes möglich. Das Stromleistungsmessgerät misst kontinuierlich in einem Haushaltsstromnetz den fließenden elektrischen Strom und dessen elektrische Spannung und ermittelt daraus die im Haushaltsstromnetz befindliche elektrische Leistung. Stromleistungsmessgerät ist z.B. als Rogowski-Spule, Zangenamperemeter, Induktionsklemme oder gleichwirkende Vorrichtung ausgebildet.

In einer weiteren Gestaltung der Erfindung ist die Stromleistungsmesseinheit derart mit einem Haushaltsstromnetz verbunden und/oder gekoppelt, dass mit einem Stromleistungsmessgerät der Stromleistungsmesseinheit der vollständige Stromleistungsverbrauch des Haushaltes und/oder den vollständige Stromleistungsbedarf des Haushaltes erfassbar ist. In einer vorteilhaften Ausbildung der Erfindung ist das Stromleistungsmessgerät an einem Stromzähler und/oder zwischen dem Stromzähler und einer Sicherung des Haushaltsstromnetzes zur Erfassung des Stromleistungsverbrauchs und/oder des Stromleistungsbedarfs des Haushaltsstromnetzes angeordnet. Damit ist die kontinuierliche Erfassung des Stromleistungsverbrauchs und/oder des vollständigen Stromleistungsbedarfs in einstellbaren Zeitintervallen möglich. Die Anordnung des Stromleistungsmessgerätes zwischen dem Stromzähler und einer Sicherung des Haushaltsstromnetzes erfordert keine Installation des Stromleistungsmessgerätes durch Fachleute und ist daher auch von einem Nutzer einfach und zuverlässig durchführbar. Optional ist mit dem Stromleistungsmessgerät über eine Schnittstelle des Stromzählers die im Haushaltsnetz verbrauchte elektrische Leistung ermittelbar. Dies hat den Vorteil, dass der Verbrauch der elektrischen Leistung über einen bereits geeichten Zähler ermittelt wird. In einer optionalen Ausgestaltung der Erfindung weist die Stromleistungsmesseinheit zwei oder mehrere Stromleistungsmessgeräte auf.

In einer Weiterbildung der Erfindung wird der Stromleistungsverbrauch und/oder den vollständigen Stromleistungsbedarf des Haushaltes in Zeitintervallen wiederholt ermittelt. Die eingespeiste Stromleistung korrespondiert dann zum jeweils aktuell ermittelten Stromleistungsverbrauch und/oder dem vollständigen Stromleistungsbedarf des Haushaltes. In einer optionalen Ausführungsform der Erfindung ist das Zeitintervall kleinergleich 2s, bevorzugt kleinergleich 1s besonders bevorzugt kleinergleich 0,5s und insbesondere bevorzugt kleiner gleich 0,3s. Dies hat den Vorteil, dass schnell auf veränderten Stromleistungsverbrauch und/oder den vollständigen Stromleistungsbedarf des Haushaltes reagiert werden kann.

In einer Weiterbildung der Erfindung erfolgt eine Anpassung der eingespeisten Stromleistung in das Haushaltsstromnetz innerhalb von weniger als 2s, bevorzugt weniger al 1s, besonders bevorzugt weniger als 0,5s und insbesondere bevorzugt innerhalb weniger als 0,3s. Dies hat den Vorteil, dass schnell auf veränderten Stromleistungsverbrauch und/oder den vollständigen Stromleistungsbedarf des Haushaltes reagiert werden kann.

In einer weiteren Ausgestaltung der Erfindung ist die maximale Ausgangsleistung eP des Wechselrichters kleiner als die Peak-Leistung pvP der Photovoltaikeinheit. Der Wechselrichter weist maximal die für Steckersolargeräte gesetzlich erlaubte Ausgangsleistung eP von elektrischer Leistung in ein Haushaltsstromnetz auf. In Deutschland beträgt derzeit die gesetzlich erlaubte Ausgangsleistung eP maximal 600W. In einer weiteren Ausgestaltung der Erfindung weist die Photovoltaikeinheit eine Peak-Leistung pvP mit pvP > 1000 W, bevorzugt mit pvP > 1600 W und besonders bevorzugt mit pvP > 2000 W auf. Hierdurch wird erreicht, dass auch an Tagen mit geringerer Sonneneinstrahlung ausreichend elektrische Leistung durch die Photovoltaikeinheit generiert werden kann, um eine optional an die Photovoltaikeinheit angeschlossene Batterie (Akku) so weit zu laden, dass die in der Batterie gespeicherte elektrische Leistung weitestgehend ausreicht, den gesamten Stromleistungsverbrauch und/oder den vollständigen Stromleistungsbedarf des Haushaltes zu den Tageszeiten zu decken, in denen die durch die Photovoltaikeinheit genierte elektrische Leistung nicht ausreicht, den Verbrauch des an das Haushaltsstromnetz angeschlossenen Verbraucher zu decken.

In einer weiteren Gestaltung der Erfindung weist der Wechselrichter eine Ausgangsleistung eP mit eP < 1000 W bevorzugt eP < 800 W besonders bevorzugt eP < 600 W auf. Der Wechselrichter weist maximal die für Steckersolargeräte gesetzlich erlaubte Ausgangsleistung eP von elektrischer Leistung in ein Haushaltsstromnetz auf. In Deutschland beträgt derzeit die gesetzlich erlaubte Ausgangsleistung eP maximal 600W.

In einer weiteren Ausbildung der Erfindung ist der Anschlussstecker geeignet, über eine Standardhaushaltssteckdose einen direkten Anschluss an ein Haushaltsstromnetz herzustellen. In einer Weiterbildung der Erfindung ist der Anschlussstecker ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1). Der Anschluss des erfindungsgemäßen Steckersolargerätes benötigt daher keine Installation durch Fachleute und ist auch von einem Nutzer einfach und zuverlässig durchführbar.

In einem vorteilhaften Aspekt der Erfindung weist das Steckersolargerät eine Stromspeicher-Einheit auf. Die Stromspeicher-Einheit ist wiederaufladbar und umfasst z.B. eine handelsübliche Lithium-Batterie, die verfügbar und preiswert ist. Die Stromspeicher-Einheit ist über eine Stromleitung mit der Photovoltaikeinheit und dem Wechselrichter verbunden.

In einer Weiterbildung der Erfindung weist die Stromspeicher-Einheit einen Stromspeicher mit einer Speicherkapazität C mit C >2,5 kWh, bevorzugt mit C > 3 kWh und besonders bevorzugt mit C > 4 kWh auf. Idealerweise weist die Stromspeicher-Einheit einen Stromspeicher mit einer derartigen Kapazität auf, dass der gesamte Stromleistungsverbrauch und/oder der vollständige Stromleistungsbedarf des Haushaltes in den Zeiten, in denen eine Aufladung der Stromspeicher-Einheit durch die Photovoltaikeinheit nicht erfolgt (z.B. in der Nacht) oder die Aufladung der Stromspeicher-Einheit durch die Photovoltaikeinheit geringer ist als die Entnahme von der Stromspeicher-Einheit (z.B. Bewölkung), gedeckt ist.

In einer weiteren Ausführung der Erfindung west die Stromspeicher-Einheit einen Regler auf, wobei mit dem Regler die von der Stromspeicher-Einheit abgebbare elektrische Leistung regelbar ist. Der Regler regelt, wie viel der von der Photovoltaikeinheit erzeugten elektrischen Leistung in der Batterie gespeichert und/oder optional an den Wechselrichter abgegeben wird. Außerdem regelt der Regler die elektrische Leistung, die von der Stromspeicher-Einheit an den Wechselrichter abgegeben wird.

In einer weiteren Ausbildung der Erfindung weist die Stromspeicher-Einheit einen Wandler auf, wobei durch den Wandler die Stromstärke der von der Stromspeicher-Einheit abgegebenen Stromleistung wandelbar ist. Optional ist durch den Wandler ebenfalls die Stromstärke der von der Photovoltaikeinheit erzeugten elektrischen Leistung wandelbar. Durch Einsatz des Wandlers wird sichergestellt, dass die Stromstärke der von der Stromspeicher-Einheit abgegebenen Stromleistung nicht die zulässige Stromstärke des Wechselrichters übersteigt und so Beschädigungen des Wechselrichters verhindert.

In einer weiteren Ausgestaltung der Erfindung wird die durch das Steckersolargerät in das Haushaltsstromnetz eingespeiste Stromleistung durch eine Steuerung gesteuert. Mittels der Steuerung wird die Einspeisung von elektrischer Leistung eP in das Haushaltsstromnetz aus der Stromspeicher-Einheit abhängig von dem Verbrauch von elektrischer Leistung vP des Haushaltsstromnetzes geregelt, der mittels der Stromleistungsmesseinheit ermittelt wird. Die elektrische Leistung eP wird dabei dem Verbrauch der elektrischen Leistung vP des Haushaltsstromnetzes angepasst, d.h. es wird maximal nur so viel elektrische Leistung eP von der Batterie in das Haushaltsstromnetzwerk eingespeist, wie auch tatsächlich verbraucht wird. Die Steuerung ist bevorzugt optional als App auf einem Gerät (z.B. Smartphone, Tablet, Personal Computer) bevorzugt mobil ausgeführt.

In einer weiteren Ausführung der Erfindung ist die Steuerung mit der Stromleistungsmesseinheit und/oder mit dem Stromleistungsmessgerät gekoppelt, wobei die durch die Stromleistungsmesseinheit und/oder das Stromleistungsmessgerät erfassten Daten mit der Steuerung weiter verarbeitbar sind. In einer weiteren Gestaltung der Erfindung ist die Steuerung mit der Stromspeicher-Einheit gekoppelt, wobei durch die Steuerung die von der Stromspeicher-Einheit abgebbare Stromleistung steuerbar ist. Die mit der Steuerung verbundenen Komponenten des Steckersolargerätes (Photovoltaikeinheit, Stromspeicher-Einheit mit Wandler und Regler, Stromleistungsmessgerät) sind optional drahtlos (z.B. WiFi, Bluetooth, IP-Verbindung) mit der Steuerung gekoppelt und steuerbar. Die elektrische Leistung eP ist dabei dem Verbrauch der elektrischen Leistung vP des Haushaltsstromnetzes anpassbar, d.h. es wird maximal nur so viel elektrische Leistung eP von der Batterie in das Haushaltsstromnetzwerk eingespeist, wie auch tatsächlich verbraucht wird.

In einer weiteren optionalen Ausführungsform der Erfindung ist die Steuerung mit dem Stromleistungsmessgerät direkt gekoppelt. Eine direkte Koppelung im Sinne dieser Schrift ist eine direkte kabelgebundene Verbindung, eine direkte drahtlose Verbindung oder eine drahtlose Verbindung ausschließlich über einen im Haushaltsstromnetz angeschlossenen Router. Dies hat den Vorteil, dass auch bei fehlender Internetverbindung eine Kommunikation zwischen Stromleistungsmessgerät und Steuerung erfolgen kann.

In einer weiteren Ausführungsform der Erfindung erfolgt eine Einspeisung einer Stromleistung in das Haushaltsstromnetz, die über dem aktuellen Stromleistungsverbrauch und/oder einen vollständigen Stromleistungsbedarf des Haushaltes liegt. Dies hat den Vorteil, dass der Stromleistungsverbrauch und/oder einen vollständigen Stromleistungsbedarf des Haushaltes immer gedeckt ist.

Die Aufgabe wird ebenfalls mittels des Steckersolargerätes zur Einspeisung von elektrischer Leistung in ein Haushaltsstromnetz gelöst. Vorteilhafte Ausführungen der Erfindung sind in den Unteransprüchen dargelegt.

Das erfindungsgemäße Steckersolargerät zur Einspeisung von elektrischer Leistung in ein Haushaltsstromnetz umfasst eine Photovoltaikeinheit (PV-Einheit), einen Wechselrichter, einen Anschlussstecker, eine Stromleistungsmesseinheit und eine Steuerung, wobei die Stromleistungsmesseinheit dafür vorgesehen und dafür geeignet ist, den gesamten Stromleistungsverbrauch und/oder den vollständigen Stromleistungsbedarf des Haushaltes zu ermitteln.

Ein Steckersolargerät im Sinne der Erfindung ist ein Kraftwerk, das Primärenergie in elektrische Energie umwandelt. Bei einem Steckersolargerät ist die Quelle der Primärenergie die Sonne, die von der Sonne abgestrahlte elektromagnetische Strahlung wird direkt mittels der Photovoltaikeinheit in elektrischen Gleichstrom umgewandelt. Steckersolargeräte sind einfache Anlagen, die mit einem Wechselrichter ausgestattet sind und dem Nutzer betriebsfertig vorkonfektioniert angeboten werden. Mittels des Wechselrichters wird der von der Photovoltaikeinheit erzeugte Gleichstrom in einen Wechselstrom umgewandelt.

Das Steckersolargerät wird über eine Steckdose angeschlossen und kann so auch ohne Fachleute durch den Nutzer an ein Haushaltsstromnetz installiert werden. Der Wechselrichter begrenzt ebenfalls die Leistung der in das Haushaltsstromnetz eingespeisten elektrischen Leistung (derzeit in Deutschland maximal 600 W).

Steckersolargeräte können ohne großen technischen Aufwand auf Balkonen, Flachdächern, Gärten und anderen Orten mit geeigneter Sonneneinstrahlung und einer verfügbaren Steckdose aufgestellt bzw. montiert werden. Namensgebend für diese Technologie ist die direkte Einspeisung von Photovoltaik-Strom in das Haushaltsstromnetz mithilfe eines Steckers. Ein Steckersolargerät weist die genannten Bauteile auf, mit denen elektrische Leistung ins Haushaltsstromnetz einspeist werden kann. Diese Bauteile passen z.B. auf einen Balkon.

Ein Haushaltsstromnetz ist ein Stromnetz innerhalb z.B. eines Wohnhauses, deren elektrische Leitungen derart ausgelegt sind, dass (in Deutschland) elektrischer Wechselstrom mit einer Wechselspannung von maximal 230 V und einer Stromstärke von maximal 16 A (begrenzt durch geeignete Sicherungen) in dem Stromnetz fließen und an elektrisch betriebene Geräte abgegeben werden kann.

Mittels der Stromleistungsmesseinheit ist der gesamte Stromleistungsverbrauch und/oder der vollständige Stromleistungsbedarf des Haushaltes jederzeit ermittelbar. Dazu ist die Stromleistungsmesseinheit an einem oder optional an einem Eingang des öffentlichen Stromnetzes zum Haushaltsstromnetz angeordnet und erfasst kontinuierlich in einstellbaren Zeitintervallen den Stromleistungsverbrauch und/oder den vollständigen Stromleistungsbedarf des Haushaltsstromnetzes.

In einer Weiterbildung der Erfindung weist die Stromleistungsmesseinheit ein Stromleistungsmessgerät auf. Das Stromleistungsmessgerät misst kontinuierlich in einem Haushaltsstromnetz den fließenden elektrischen Strom und dessen elektrische Spannung und ermittelt daraus die im Haushaltsstromnetz befindliche elektrische Leistung. Stromleistungsmessgerät ist z.B. als Rogowski-Spule, Zangenamperemeter, Induktionsklemme oder gleichwirkende Vorrichtung ausgebildet.

In einer weiteren Ausführung der Erfindung weist die Stromleistungsmesseinheit mehrere Stromleistungsmessgeräte auf. Jedes der Stromleistungsmessgeräte ist optional an einem unterschiedlichen Ort des Haushaltsstromnetzes angeordnet. Damit ist die kontinuierliche Erfassung des Stromleistungsverbrauchs und/oder des vollständigen Stromleistungsbedarfs in einstellbaren Zeitintervallen des Haushaltsstromnetzes möglich.

In einer weiteren Gestaltung der Erfindung ist die Stromleistungsmesseinheit derart mit einem Haushaltsstromnetz koppelbar, dass mit einem Stromleistungsmessgerät der Stromleistungsmesseinheit der vollständige Stromleistungsverbrauch des Haushaltes und/oder den vollständige Stromleistungsbedarf des Haushaltes erfassbar ist. In einer vorteilhaften Ausbildung der Erfindung ist das Stromleistungsmessgerät an einem Stromzähler und/oder zwischen dem Stromzähler und einer Sicherung des Haushaltsstromnetzes zur Erfassung des Stromleistungsverbrauchs und/oder des Stromleistungsbedarfs des Haushaltsstromnetzes angeordnet. Damit ist die kontinuierliche Erfassung des Stromleistungsverbrauchs und/oder des vollständigen Stromleistungsbedarfs in einstellbaren Zeitintervallen möglich. Die Anordnung des Stromleistungsmessgerätes über eine Schnittstelle des Stromzählers im Haushaltsnetz erfordert keine Installation des Stromleistungsmessgerätes durch Fachleute und ist daher auch von einem Nutzer einfach und zuverlässig durchführbar. Optional kann ein Stromleistungsmessgerätes zwischen dem Stromzähler und einer Sicherung des Haushaltsstromnetzes angeordnet werden. Hiermit ist die im Haushaltsnetz verbrauchte elektrische Leistung ermittelbar. Dies hat den Vorteil, dass der Verbrauch der elektrischen Leistung über einen bereits geeichten Zähler ermittelt wird.

In einer weiteren Ausgestaltung der Erfindung weist die Photovoltaikeinheit eine Peak-Leistung pvP mit pvP > 1000 W, bevorzugt mit pvP > 1600 W und besonders bevorzugt mit pvP > 2000 W auf. Hierdurch wird erreicht, dass auch an Tagen mit geringerer Sonneneinstrahlung ausreichend elektrische Leistung durch die Photovoltaikeinheit generiert werden kann, um eine optional an die Photovoltaikeinheit angeschlossene Batterie (Akku) so weit zu laden, dass die in der Batterie gespeicherte elektrische Leistung weitestgehend ausreicht, den gesamten Stromleistungsverbrauch und/oder den vollständigen Stromleistungsbedarf des Haushaltes zu den Tageszeiten zu decken, in denen die durch die Photovoltaikeinheit genierte elektrische Leistung nicht ausreicht, den Verbrauch des an das Haushaltsstromnetz angeschlossenen Verbraucher zu decken.

In einer weiteren Ausführung der Erfindung weist die Photovoltaikeinheit mehrere PV-Module auf. Die Photovoltaikeinheit ist daher optional um beliebig viele PV-Module erweiterbar, Voraussetzung ist nur die technische Spezifikation der angeschlossenen PV-Module, die mit den Mindestanforderungen dieser Erfindung übereinstimmen muss.

In einer weiteren Gestaltung der Erfindung weist der Wechselrichter eine Ausgangsleistung eP mit eP < 1000 W bevorzugt eP < 800 W besonders bevorzugt eP < 600 W auf. Der Wechselrichter weist maximal die für Steckersolargeräte gesetzlich erlaubte Ausgangsleistung eP von elektrischer Leistung in ein Haushaltsstromnetz auf. In Deutschland beträgt derzeit die gesetzlich erlaubte Ausgangsleistung eP maximal 600W.

In einer weiteren Ausbildung der Erfindung ist der Anschlussstecker geeignet, über eine Standardhaushaltssteckdose einen direkten Anschluss an ein Haushaltsstromnetz herzustellen. In einer Weiterbildung der Erfindung ist der Anschlussstecker ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) und/oder Wieland-Stecker. Der Anschluss des erfindungsgemäßen Steckersolargerätes benötigt daher keine Installation durch Fachleute und ist auch von einem Nutzer einfach und zuverlässig durchführbar. In einem vorteilhaften Aspekt der Erfindung weist das Steckersolargerät eine Stromspeicher-Einheit auf. Die Stromspeicher-Einheit ist wiederaufladbar und umfasst z.B. eine handelsübliche Lithium-Batterie, die verfügbar und preiswert ist. Die Stromspeicher-Einheit ist über eine Stromleitung mit der Photovoltaikeinheit und dem Wechselrichter verbunden.

In einer Weiterbildung der Erfindung weist die Stromspeicher-Einheit einen Stromspeicher mit einer Speicherkapazität C mit C >2,5 kWh, bevorzugt mit C > 3 kWh und besonders bevorzugt mit C > 4 kWh auf. Idealerweise weist die Stromspeicher-Einheit einen Stromspeicher mit einer derartigen Kapazität auf, dass der gesamte Stromleistungsverbrauch und/oder der vollständige Stromleistungsbedarf des Haushaltes in den Zeiten, in denen eine Aufladung der Stromspeicher-Einheit durch die Photovoltaikeinheit nicht erfolgt (z.B. in der Nacht) oder die Aufladung der Stromspeicher-Einheit durch die Photovoltaikeinheit geringer ist als die Entnahme von der Stromspeicher-Einheit (z.B. Bewölkung), gedeckt ist.

In einer weiteren Ausführung der Erfindung weist die Stromspeicher-Einheit einen Regler auf, wobei mit dem Regler die von der Stromspeicher-Einheit abgebbare elektrische Leistung regelbar ist. Der Regler regelt optional, wie viel der von der Photovoltaikeinheit erzeugten elektrischen Leistung in der Batterie gespeichert und/oder optional an den Wechselrichter abgegeben wird. In einer weiteren Ausgestaltung der Erfindung regelt der Regler die elektrische Leistung, die von der Stromspeicher-Einheit an den Wechselrichter abgegeben wird. Optional kann der Regler auch an oder in der Steuerung angeordnet werden.

In einer weiteren Ausbildung der Erfindung weist die Stromspeicher-Einheit einen Wandler auf, wobei durch den Wandler die Stromstärke der von der Stromspeicher-Einheit abgegebenen Stromleistung wandelbar ist. Optional ist durch den Wandler ebenfalls die Stromstärke der von der Photovoltaikeinheit erzeugten elektrischen Leistung wandelbar. Durch Einsatz des Wandlers wird sichergestellt, dass die Stromstärke der von der Stromspeicher-Einheit abgegebenen Stromleistung nicht die zulässige Stromstärke des Wechselrichters übersteigt und so Beschädigungen des Wechselrichters verhindert.

In einer weiteren Ausgestaltung der Erfindung weist das Steckersolargerät eine Steuerung auf. Mittels der Steuerung ist die Einspeisung von elektrischer Leistung eP in das Haushaltsstromnetz aus der Stromspeicher-Einheit abhängig von dem Verbrauch von elektrischer Leistung vP des Haushaltsstromnetzes regelbar, der mittels der Stromleistungsmesseinheit ermittelbar ist. Die elektrische Leistung eP ist dabei dem Verbrauch der elektrischen Leistung vP des Haushaltsstromnetzes anpassbar, d.h. es wird maximal nur so viel elektrische Leistung eP von der Batterie in das Haushaltsstromnetzwerk eingespeist, wie auch tatsächlich verbraucht wird. Die Steuerung ist bevorzugt optional als App auf einem Gerät (z.B. Smartphone, Tablet, Personal Computer) bevorzugt mobil ausgeführt.

In einer weiteren Ausführung der Erfindung ist die Steuerung mit der Stromleistungsmesseinheit gekoppelt, wobei die durch die Stromleistungsmesseinheit erfassten Daten mit der Steuerung weiter verarbeitbar sind. In einer weiteren Gestaltung der Erfindung ist die Steuerung mit der Stromspeicher-Einheit gekoppelt, wobei durch die Steuerung die von der Stromspeicher-Einheit abgebbare Stromleistung steuerbar ist. Die mit der Steuerung verbundenen Komponenten des Steckersolargerätes (Photovoltaikeinheit, Stromspeicher-Einheit mit Wandler und Regler, Stromleistungsmesseinheit) sind optional drahtlos (z.B. WiFi, Bluetooth, IP-Verbindung) steuerbar. Die elektrische Leistung eP ist dabei dem Verbrauch der elektrischen Leistung vP des Haushaltsstromnetzes anpassbar, d.h. es wird maximal nur so viel elektrische Leistung eP von der Batterie in das Haushaltsstromnetzwerk eingespeist, wie auch tatsächlich verbraucht wird.

In einer weiteren optionalen Ausführungsform der Erfindung ist die Steuerung mit dem Stromleistungsmessgerät direkt gekoppelt, Eine direkte Koppelung im Sinne dieser Schrift ist eine direkte kabelgebundene Verbindung, eine direkte drahtlose Verbindung oder eine drahtlose Verbindung ausschließlich über einen im Haushaltsstromnetz angeschlossenen Router, Dies hat den Vorteil, dass auch bei fehlender Internetverbindung eine Kommunikation zwischen Stromleistungsmessgerät und Steuerung erfolgen kann.

In einer weiteren Weiterbildung der Erfindung ist das Steckersolargerät dafür geeignet und dafür vorgesehen eine Stromleistung in das Haushaltsstromnetz einzuspeisen, die über dem aktuellen den gesamten Stromleistungsverbrauch und/oder den vollständigen Stromleistungsbedarf des Haushaltes liegt. Dies halt den Vorteil, dass sichergestellt, dass der gesamte Stromleistungsverbrauch und/oder der vollständigen Stromleistungsbedarf des Haushaltes gedeckt wird.

Ausführungsbeispiele des erfindungsgemäßen Steckersolargerätes sind in den Zeichnungen schematisch vereinfacht dargestellt und werden in der nachfolgenden Beschreibung näher erläutert.

Es zeigen:
- Fig. 1:: Steckersolargerät, ein Stromleistungsmessgerät zwischen Stromzähler und Sicherungen angeordnet
- Fig. 2:: Steckersolargerät, ein Stromleistungsmessgerät an Stromzähler angeordnet
- Fig. 3:: Steckersolargerät, ein Stromleistungsmessgerät zwischen Stromzähler und Sicherungen angeordnet, Wandler an Stromspeicher-Einheit angeordnet
- Fig. 4:: Steckersolargerät, ein Stromleistungsmessgerät zwischen Stromzähler und Sicherungen angeordnet, Regler an Stromspeicher-Einheit angeordnet
- Fig. 5:: Steckersolargerät, zwei PV-Module
- Fig. 6:: Steckersolargerät, zwei PV-Module, mobiles Endgerät mit Steuerung verbunden
- Fig. 7:: Steckersolargerät, Steuerung im Gleichstrom-Leiter

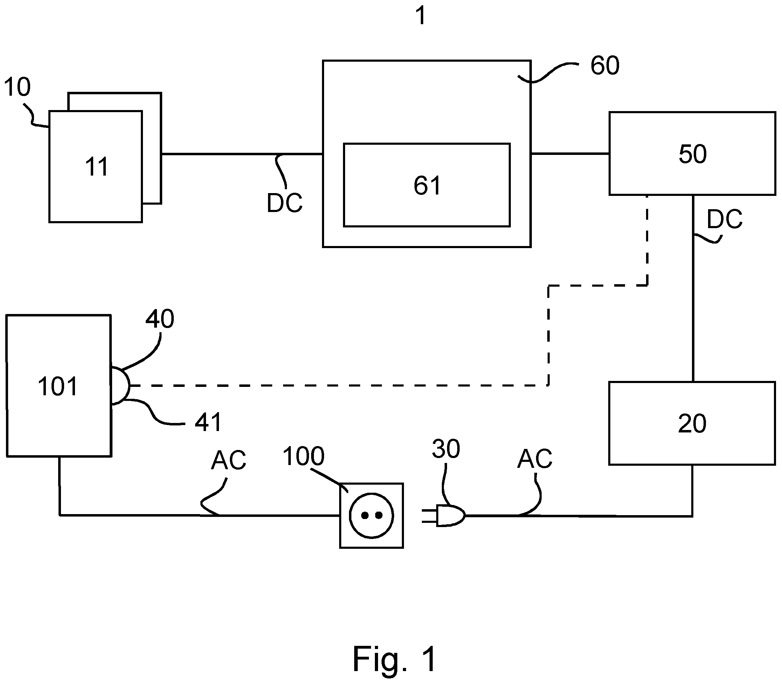

Fig. 1 zeigt schematisch den Aufbau und die Verschaltung des erfindungsgemäßen Steckersolargerätes 1. Das Steckersolargerät 1 weist die Photovoltaikeinheit 10 auf, die ein PV-Modul 11 aufweist. Das PV-Modul 11 ist über eine Stromleitung DC mit dem Wechselrichter 20 verbunden. Der Wechselrichter 20 weist maximal die erlaubte Ausgangsleistung eP von elektrischer Leistung in ein Haushaltsstromnetz auf, optional eP < 1000W bevorzugt eP < 800W besonders bevorzugt eP < 600W. In Deutschland beträgt die derzeit die erlaubte Ausgangsleistung eP maximal 600W, in allen gezeigten Ausführungsbeispielen beträgt die maximale Ausgangsleistung eP des Wechselrichters 20 daher 600W. Der Wechselrichter 20 ist über die Stromleitung AC mit dem Stecker 30 verbunden, der einen Anschlussstecker 30 zum Anschluss an das Haushaltsstromnetz aufweist.

Der Anschlussstecker 30 ist ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1). In diesem und allen weiteren Ausführungsbeispielen ist der Anschlussstecker 30 ein Stecker-Typ F (CEE 7/4) "Schukostecker", mit dem die vom Steckersolargerät 1 erzeugt elektrische Leistung über die Standardhaushaltssteckdose 100 in das Haushaltsstromnetz eingespeist werden kann.

Zwischen PV-Modulen 11 und Wechselrichter 20 ist parallel eine Stromspeicher-Einheit 60 geschaltet, die einen wiederaufladbaren Stromspeicher 61 aufweist. Der Stromspeicher 61 weist eine Speicherkapazität C von 5 kWh auf, durch Anordnung von weiteren Stromspeichern 61 kann die Speicherkapazität C der Stromspeicher-Einheit 60 beliebig gewählt werden. Der wiederaufladbare Stromspeicher 61 ist ein Li-Eisenphosphat-Akku, möglich sind aber auch andere Ausführungsformen, z.B. ein Blei-Säure-Akku.

Die Steuerung 50 ist mit der Stromleistungsmesseinheit 40 verbunden, die in diesem Ausführungsbeispiel ein einzelnes Stromleistungsmessgerät 41 aufweist. Das Stromleistungsmessgerät 41 weist einen optischen Lesekopf auf, der als optischer Lesekopf ausgeführt und über eine Schnittstelle mit dem Stromzähler 101 gekoppelt ist.

Die Steuerung 50 ist außerdem mit der Stromspeicher-Einheit 60 verbunden. Die Steuerung 50 ist als App auf einem Gerät (z.B. Smartphone, Tablet, Personal Computer) ausgeführt. Die Verbindung zur Stromspeicher-Einheit 60 und zum Stromleistungsmesseinheit 40 ist kabelgebunden. Optional kann diese Verbindung auch drahtlos beispielsweise mittels WiFi erfolgen.

Mittels der Steuerung ist ein Verfahren zur Einspeisung von elektrischer Leistung in ein Haushaltsstromnetzwerk steuerbar. Das PV-Modul 11 erzeugt eine elektrische Leistung. Die Peak-Leistung pvP der Photovoltaikeinheit 10 ist optional derart gewählt, dass die Peak-Leistung pvP der Photovoltaikeinheit 10 höher ist als die maximal erlaubte Einspeiseleistung (derzeit in Deutschland 600 W) von elektrischer Leistung in ein Haushaltsstromnetz. Idealerweise beträgt die Peak-Leistung pvP der Photovoltaikeinheit 10 optional ein Mehrfaches der maximal erlaubten Einspeiseleistung, z.B. das Doppelte oder Dreifache der Einspeiseleistung. Die Photovoltaikeinheit 10 weist eine Peak-Leistung pvP mit pvP > 1000W, bevorzugt mit pvP > 1600W und besonders bevorzugt mit pvP > 2000W auf, in diesem Ausführungsbeispiel weist die Photovoltaikeinheit 10 eine Peak-Leistung pvP = 1600W auf.

Die von der Photovoltaikeinheit 10 erzeugte elektrische Leistung wird als Gleichstrom DC in der Stromspeicher-Einheit 60 gespeichert. Das Speichern der erzeugten elektrischen Leistung erfolgt optional so lange, bis die Stromspeicher-Einheit 60 vollständig geladen ist.

Während des Betriebes des Steckersolargerätes 1 erfasst die Stromleistungsmesseinheit 40 mittels des Stromleistungsmessgerätes 41 die aktuelle und vollständige Bezugs- und/oder Verbrauchsstromleistung des Haushaltstromnetzes aller im Haushaltstromnetz befindlichen Stromverbraucher. Die Erfassung der Bezugs- und/oder der Verbrauchsstromleistung erfolgt fortlaufend im Takt von 1 Sekunde. Diese aktuelle und vollständig erfasste Bezugs- und/oder des Verbrauchsstromleistung des Haushaltstromnetzes wird ebenfalls im Takt von 1 Sekunde an die Steuerung 50 übertragen. Die Steuerung 50 regelt auf Grundlage der erfassten Bezugs- und/oder der Verbrauchsstromleistung des Haushaltstromnetzes über einen DC/DC-Regler die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Der Wechselrichter 20 wandelt den Gleichstrom DC der Stromspeicher-Einheit 60 in einen Wechselstrom AC (in Deutschland mit 230V) um, über den mit dem Wechselrichter 20 verbundenen Anschlussstecker 30 wird der Wechselstrom AC in die Standardhaushaltssteckdose 100 in das Haushaltsstromnetz eingespeist. In anderen Ausführungsformen kann der Takt auch beispielsweise 0,5 Sekunden, 2 Sekunden oder auch 2,5 Sekunden betragen. In jedem Fall bleibt der Takt aber kleinergleich als 3 Sekunden. Erfasst die Stromleistungsmessgerät einen Stromleistungsverbrauch und/oder einen vollständigen Stromleistungsbedarf des Haushaltes von 265W, so wird nur eine kurze Zeit später eine Stromleistung in Höhe von 265W in das Haushaltsstromnetz eingespeist. Im Falle eines abfallenden Stromleistungsverbrauchs und/oder vollständigen Stromleistungsbedarfs des Haushaltes erfolgt eine Einspeisung einer Stromleistung in das Haushaltsstromnetz, die über dem aktuellen Stromleistungsverbrauch und/oder einen vollständigen Stromleistungsbedarf des Haushaltes liegt.

Dabei wird die Einspeisung von Stromleistung von der Stromspeicher-Einheit 60 durch zwei Faktoren begrenzt, einerseits durch die maximale Ausgangsleistung eP des Wechselrichters 20 (hier 600W), andererseits durch den Ladezustand der Stromspeicher-Einheit 60. Wenn die erfasste Bezugs- und/oder Verbrauchsstromleistung des Haushaltstromnetzes über der maximalen Ausgangsleistung eP des Wechselrichters 20 liegt, wird die eingespeiste Stromleistung auf die maximale Ausgangsleistung eP des Wechselrichters 20 begrenzt. In diesem und allen weiteren Ausführungsbeispielen werden also maximal 600W Stromleistung in das Haushaltstromnetz eingespeist. Die Einspeisung von Stromleistung von der Stromspeicher-Einheit 60 erfolgt nur dann, wenn die Stromspeicher-Einheit 60 genügend geladen ist. Ist die Stromspeicher-Einheit 60 nicht oder nur so weit geladen, dass eine weitere Entnahme von Stromleistung der Stromspeicher-Einheit 60 Schaden zufügen kann (z.B. durch Tiefentladung), erfolgt keine Einspeisung von Stromleistung von der Stromspeicher-Einheit 60. Die Steuerung 50, die mit der Stromspeicher-Einheit 60 verbunden ist, erkennt dies und regelt entsprechend die Abgabe der Stromleistung. In anderen Ausführungen kann die maximale Ausgangsleistung eP des Wechselrichters 20 auch 800W, 1000W oder auch 1800W betragen.

Die Stromspeicher-Einheit 60 weist weiterhin eine Bypass-Stromleitung auf, durch die eine Stromleistung von der Photovoltaikeinheit 10 über den Laderegler 62 an dem Stromspeicher 61 vorbei direkt zum Wechselrichter 20 geleitet werden kann.

Dadurch wird erreicht, dass so lange elektrische Energie aus der Stromspeicher-Einheit 60 in das Haushaltstromnetz eingespeist wird, wie die Stromspeicher-Einheit 60 über elektrische Energie verfügt. Durch eine geeignete Wahl der Peak-Leistung der Photovoltaikeinheit 10 (pvP = 1600W) ist sichergestellt, dass in den Sonnenstunden des Tages die Stromspeicher-Einheit 60 ständig geladen wird und damit auch in den sonnenlosen Stunden des Tages (z.B. in der Nacht, bewölkter Himmel etc.) elektrische Leistung eP in das Haushaltstromnetz abgibt. Die elektrische Leistung eP ist dabei dem Verbrauch der elektrischen Leistung vP des Haushaltsstromnetzes angepasst, d.h. es wird maximal nur so viel elektrische Leistung eP von der Stromspeicher-Einheit 60 in das Haushaltstromnetz eingespeist, wie auch tatsächlich verbraucht wird. Damit ist sichergestellt, dass der Bedarf von elektrischer Leistung vP des Haushaltstromnetzes gedeckt ist, gleichzeitig möglichst wenig elektrische Leistung aus dem öffentlichen Stromnetz in das Haushaltstromnetz eingespeist wird.

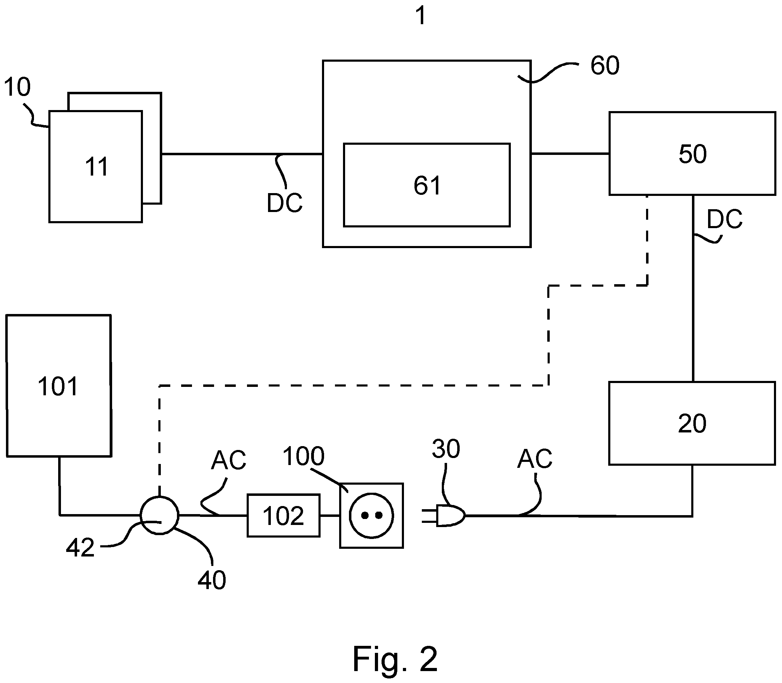

Eine Variante des Steckersolargerätes 1 zeigt Fig. 2. Das hier gezeigte Steckersolargerät 1 entspricht dem im vorhergehenden Ausführungsbeispiel gezeigten Steckersolargerät 1 (s. Fig. 1), in diesem Ausführungsbeispiel weist die Stromleistungsmesseinheit 40 ein Stromleistungsmessgerät 42 auf, das als Stromstärke-Messgerät (Amperemeter) ausgeführt ist. Das Stromleistungsmessgerät 42 ist an einer Schnittstelle des Stromzählers 101 des Haushaltsstromnetzes angeordnet und erfasst im Takt von 1 Sekunde die vollständige Bezugs- und/oder Verbrauchsstromleistung des Haushaltstromnetzes. Das Stromleistungsmessgerät 42 ist ebenfalls mit der Steuerung 50 drahtlos verbunden.

Das Verfahren zur Einspeisung von elektrischer Leistung in das Haushaltsstromnetzwerk ist gleich dem im vorhergehenden Ausführungsbeispiel (s. Fig. 1) vorgestellten Verfahren.

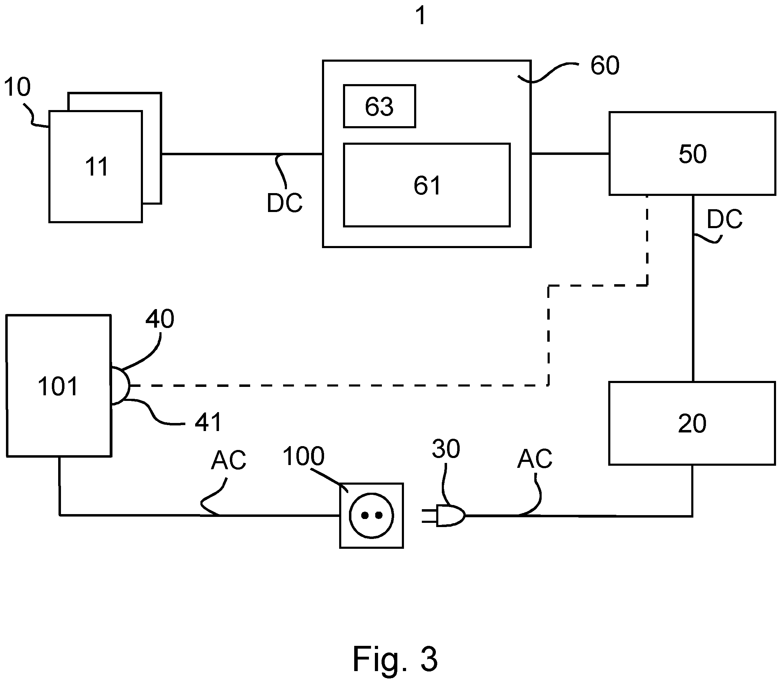

Fig. 3 zeigt eine weitere Variante des erfindungsgemäßen Steckersolargerätes 1. In diesem Ausführungsbeispiel weist die Stromleistungsmesseinheit 40 ein Stromleistungsmessgerät 41 auf. Das Stromleistungsmessgerät 41 weist einen optischen Lesekopf auf, der zwischen dem Stromzähler 101 und den Sicherungen 102 der einzelnen Stromkreise des Haushaltsstromnetzes angeordnet ist (s. Fig. 1). Das Stromleistungsmessgerät 41 erfasst im Takt von 1 Sekunde die vollständige Bezugs- und/oder Verbrauchsstromleistung des Haushaltstromnetzes und sendet die erfassten Daten an die mit dem Stromleistungsmessgerät 41 verbundene Steuerung 50.

Die Stromspeicher-Einheit 60 ist mit der Steuerung 50 verbunden ist. Die Steuerung 50 weist einen Wandler 63 auf und regelt auf Grundlage der erfassten Bezugs- und/oder der Verbrauchsstromleistung des Haushaltstromnetzes durch das Stromleistungsmessgerät 41 die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Die Steuerung 50 steuert dabei den Wandler 63 derart, dass die die Stromstärke der von der Stromspeicher-Einheit 60 abgegebenen Stromleistung nicht die zulässige Stromstärke des Wechselrichters 20 übersteigt. Dadurch werden Beschädigungen des Wechselrichters 20 verhindert.

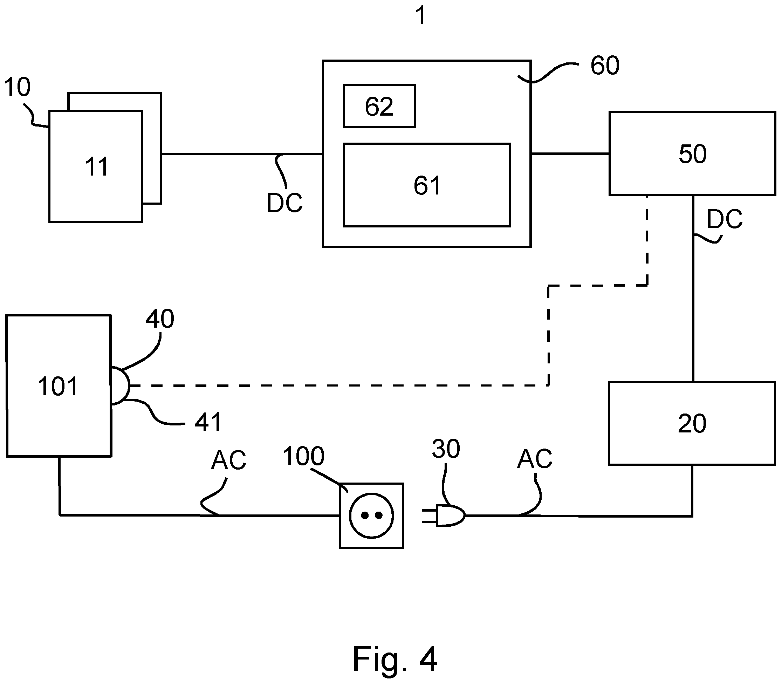

Eine weitere Variante des erfindungsgemäßen Steckersolargerätes 1 zeigt Fig. 4. Das Stromleistungsmessgerät 41 weist einen optischen Lesekopf auf, der als optischer Lesekopf ausgeführt und über eine Schnittstelle mit dem Stromzähler 101 gekoppelt ist (s. Fig. 1). Das Stromleistungsmessgerät 41 erfasst ebenfalls im Takt von 1 Sekunde die vollständige Bezugs- und/oder Verbrauchsstromleistung des Haushaltstromnetzes und sendet die erfassten Daten an die mit dem Stromleistungsmessgerät 41 verbundene Steuerung 50.

Die Stromspeicher-Einheit 60 weist neben dem Stromspeicher 61 mit einer Speicherkapazität C von 5 kWh einen Regler 62 auf, der mit der Steuerung 50 verbunden ist. Die Steuerung 50 regelt auf Grundlage der erfassten Bezugs- und/oder der Verbrauchsstromleistung des Haushaltstromnetzes durch das Stromleistungsmessgerät 41 die Stromspeicher-Einheit 60 derart, dass die Stromspeicher-Einheit 60 eine derartige Stromleistung als Gleichstrom DC an den Wechselrichter 20 geleitet wird, dass die Bezugs- und/oder die Verbrauchsstromleistung des Haushaltstromnetzes mit einem Takt von 1 Sekunde vollständig gedeckt ist. Der Regler 62 regelt gesteuert durch die Steuerung 50, wie viel der von der Photovoltaikeinheit 10 erzeugten elektrischen Leistung in der Stromspeicher-Einheit 60 gespeichert und/oder optional an den Wechselrichter 20 abgegeben wird. Diese Menge ist z.B. abhängig von dem Ladezustand der Stromspeicher-Einheit 60. Außerdem regelt ein Wandler die elektrische Leistung, die von der Stromspeicher-Einheit 60 an den Wechselrichter 20 abgegeben wird.

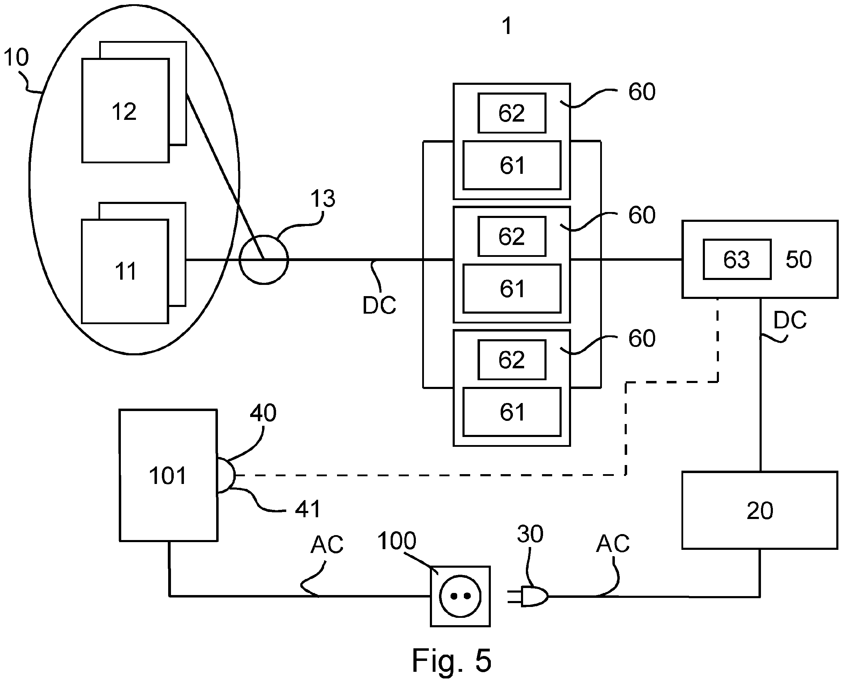

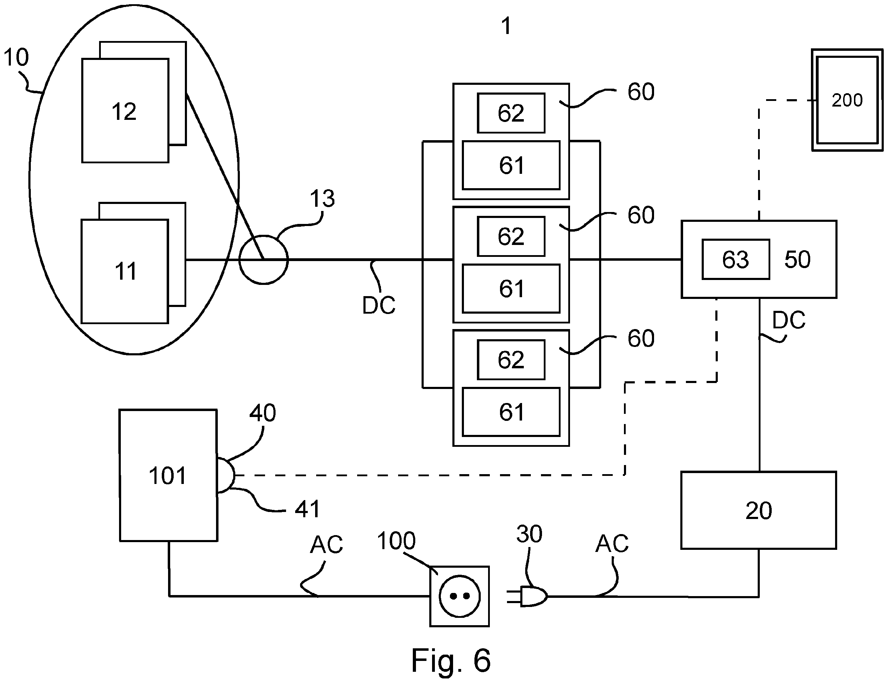

Fig. 5 und Fig. 6 zeigen weitere Varianten des erfindungsgemäßen Steckersolargerätes 1. In diesem Ausführungsbeispiel weist die Stromleistungsmesseinheit 40 ein Stromleistungsmessgerät 41 auf. Das Stromleistungsmessgerät 41 weist ebenfalls einen optischen Lesekopf auf, der zwischen dem Stromzähler 101 und den Sicherungen 102 der einzelnen Stromkreise des Haushaltsstromnetzes angeordnet ist (s. Fig. 1). Das Stromleistungsmessgerät 41 erfasst im Takt von 1 Sekunde die vollständige Bezugs- und/oder Verbrauchsstromleistung des Haushaltstromnetzes und sendet die erfassten Daten an die mit dem Stromleistungsmessgerät 41 verbundene Steuerung 50.

Die Photovoltaikeinheit 10 weist ein bis drei PV-Module 11, 12 je Stromspeicher-Einheit 60 auf. Ein PV-Modul 11, 12 weist jeweils zwei in Reihe geschaltete Solarpanels auf. Jedes PV-Modul 11, 12 weist eine Peak-Leistung pvP von 1000W auf, die Photovoltaikeinheit 10 weist also in diesem Ausführungsbeispiel eine Peak-Leistung pvP = 3000W auf.

Die PV-Module 11, 12 sind mittels des Y-Verbinders 13 derart parallelgeschaltet, dass die von den PV-Modulen 11, 12 erzeugte elektrische Leistung über eine Stromleitung DC an die Stromspeicher-Einheit 60 und den Wechselrichter 20 geleitet wird. Die Verbindung der PV-Module 11, 12 an die Stromleitung DC ist über den Y-Verbinder 13 derart leicht und einfach zu bewerkstelligen, dass auch Nichtfachleute die Photovoltaikeinheit 10 um weitere PV-Module erweitern können. In ähnlicher Weise ist die Speicherkapazität C der Stromspeicher-Einheit 60 durch Anschluss von weiteren Stromspeicher-Einheiten 60 beliebig erweiterbar.

Die Stromspeicher-Einheiten 60 weisen neben dem Stromspeicher 61 mit einer Speicherkapazität C von jeweils 5 kWh einen Regler 62 auf, der mit der Steuerung 50 verbunden sind und durch die Steuerung 50 gesteuert werden. Der Regler 62 regelt die elektrische Leistung, die von der Stromspeicher-Einheit 60 an den Wechselrichter 20 abgegeben wird, und die Menge der von der Photovoltaikeinheit 10 erzeugten elektrischen Leistung in der Stromspeicher-Einheit 60 gespeicherten und/oder optional an den Wechselrichter 20 abgegebenen elektrischen Leistung. Der an der Steuerung 50 angeordnete Wandler 63 wandelt die Stromstärke der von der Stromspeicher-Einheit 60 abgegebenen Stromleistung derart, dass die zulässige Stromstärke des Wechselrichters 20 nicht überschritten wird.

Die Steuerung 50 ist über eine drahtlose Verbindung (z.B. WiFi, Bluetooth, IP-Verbindung) mit einem mobilen Endgerät 200 verbunden (Fig. 6), in diesem Ausführungsbeispiel ein Smartphone mit geeigneter App. Über die App des mobilen Endgerätes 200 kann ein Nutzer jederzeit Daten des Steckersolargerätes 1 abrufen und einsehen, z.B. Leistung der Photovoltaikeinheit 10, in das Haushaltsstromnetz eingespeiste elektrische Leistung, Ladezustand der Stromspeicher-Einheit 60 uvm.

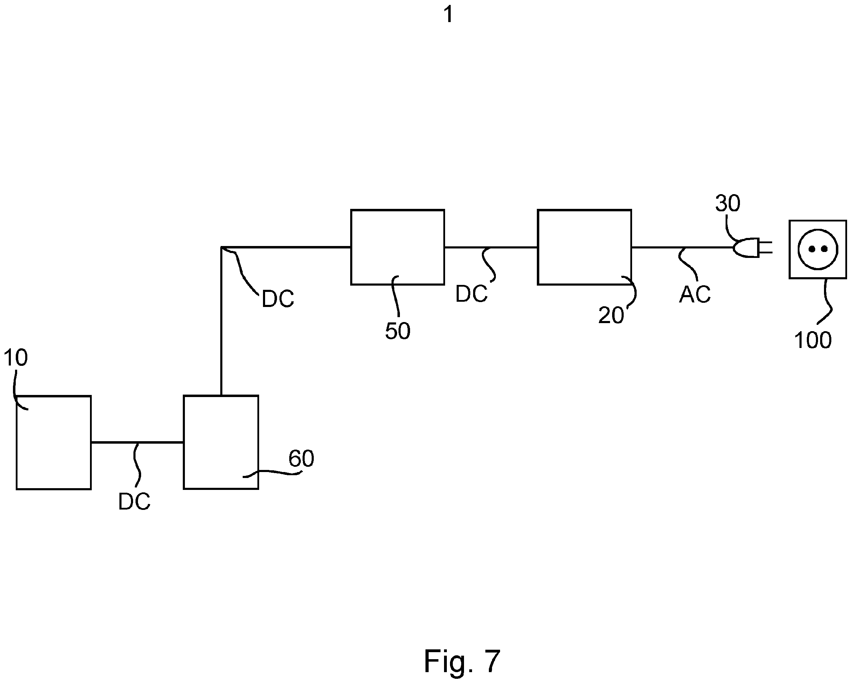

In einer Variante des vorstehenden Ausführungsbeispiels (s. Fig. 5, 6) zeigt Fig. 7 ein erfindungsgemäßes Steckersolargerät 1, bei dem die Steuerung 50 nicht wie in den vorhergehenden Ausführungsbeispielen (s. Fig. 1 bis 6) separat vom Steckersolargerät 1 angeordnet und beliebig anordenbar ist, sondern fest angeordnet im Gleichstrom-Leiter DC zwischen Stromspeicher-Einheit 60 und Wechselrichter 20.

Die von der Photovoltaikeinheit 10 erzeugte elektrische Leistung wird als Gleichstrom DC in der Stromspeicher-Einheit 60 gespeichert. Die Steuerung 50 regelt auf Grundlage der erfassten Bezugs- und/oder der Verbrauchsstromleistung des Haushaltstromnetzes die Stromspeicher-Einheit 60 derart, dass die Stromspeicher-Einheit 60 eine derartige Stromleistung als Gleichstrom DC an den Wechselrichter 20 abgibt, dass die Bezugs- und/oder die Verbrauchsstromleistung des Haushaltstromnetzes mit einem Takt von 1 Sekunde vollständig gedeckt ist. Der Wechselrichter 20 wandelt den Gleichstrom DC der Stromspeicher-Einheit 60 in einen Wechselstrom AC um, über den mit dem Wechselrichter 20 verbundenen Anschlussstecker 30 wird der Wechselstrom AC in die Standardhaushaltssteckdose 100 in das Haushaltsstromnetz eingespeist.

Die Steuerung 50 ist optional in Baueinheit mit Regler 62 und Wandler 63 derart angeordnet, dass Stromstärke der von der Stromspeicher-Einheit 60 abgegebenen Stromleistung und die Menge der von der Photovoltaikeinheit 10 erzeugten elektrischen Leistung in der Stromspeicher-Einheit 60 gespeicherten und/oder optional an den Wechselrichter 20 abgegebenen elektrischen Leistung geregelt wird.

### BEZUGSZEICHENLISTE

- 1: Steckersolargerät
- 10: Photovoltaikeinheit
- 11, 12: PV-Modul
- 13: Weiche / Y-Verbinder
- 20: Wechselrichter
- 30: Anschlussstecker
- 40: Stromleistungsmesseinheit
- 41, 42: Stromleistungsmessgerät
- 50: Steuerung
- 60: Stromspeicher-Einheit
- 61: Stromspeicher (aufladbar)
- 62: Regler
- 63: Wandler
- 100: Anschluss des Haushaltsstromnetzes / Standardhaushaltssteckdose
- 101: Stromzähler des Haushaltsstromnetzes
- 102: Sicherung des Haushaltsstromnetzes
- 200: Mobiles Endgerät
- AC: Wechselstrom
- DC: Gleichstrom

## Patentansprüche

1. Verfahren zum Betrieb eines Steckersolargerätes (1) zur Einspeisung von elektrischer Leistung in ein Haushaltsstromnetz mit den Verfahrensschritten:
• Erzeugen einer Stromleistung mit einer Photovoltaik-Einheit (10) eines Steckersolargerätes (1),
• Speichern der erzeugten Stromleistung in einer Stromspeicher-Einheit (60),
• Messen der aktuellen Bezugs- und/oder des Verbrauchsstromleistung des Haushaltstromnetzes und
• Einspeisen einer Stromleistung aus der Stromspeicher-Einheit (60) über einen Wechselrichter (20),
**dadurch gekennzeichnet, dass**
die Menge der eingespeisten Stromleistung mit der gemessenen Bezug- und/oder Verbrauchsstromleistung korrespondiert.

2. Verfahren zum Betrieb eines Steckersolargerätes (1) zur Einspeisung von elektrischer Leistung in ein Haushaltsstromnetz nach Anspruch 1,
**dadurch gekennzeichnet, dass**
die aktuelle Bezug- und oder Verbrauchsstromleistung mit einer Stromleistungsmesseinheit (40) gemessen wird,
wobei die Stromleistungsmesseinheit (40) mehrere Stromleistungsmessgeräte (41, 42) aufweist,
wobei das Stromleistungsmessgerät (41) derart im Haushaltsstromnetz angeordnet und/oder mit dem Haushaltsstromnetz gekoppelt ist, dass das Stromleistungsmessgerät (41) den gesamten Stromleistungsverbrauch und/oder den vollständigen Stromleistungsbedarf des Haushaltes ermittelt,
wobei das Stromleistungsmessgerät (41, 42) an einem Stromzähler (102) und/oder zwischen dem Stromzähler (102) und einer Sicherung (101) des Haushaltsstromnetzes zur Erfassung des Stromleistungsverbrauchs und/oder des Stromleistungsbedarfs des Haushaltsstromnetzes angeordnet ist.

3. Verfahren zum Betrieb eines Steckersolargerätes (1) zur Einspeisung von elektrischer Leistung in ein Haushaltsstromnetz nach einem oder mehreren der vorhergehenden Ansprüche,
**dadurch gekennzeichnet, dass**
die eingespeiste Stromleistung über dem aktuellen gesamten Stromleistungsverbrauch und/oder dem aktuellen vollständigen Stromleistungsbedarf des Haushaltes liegt.

4. Verfahren zum Betrieb eines Steckersolargerätes (1) zur Einspeisung von elektrischer Leistung in ein Haushaltsstromnetz nach einem oder mehreren der vorhergehenden Ansprüche,
**dadurch gekennzeichnet, dass**
die maximale Ausgangsleistung eP des Wechselrichters (20) kleiner ist als die Peak-Leistung pvP der Photovoltaikeinheit (10).

5. Verfahren zum Betrieb eines Steckersolargerätes (1) zur Einspeisung von elektrischer Leistung in ein Haushaltsstromnetz nach einem oder mehreren der vorhergehenden Ansprüche,
**dadurch gekennzeichnet, dass**
der Anschlussstecker (30) geeignet ist, über eine Standardhaushaltssteckdose (100) einen direkten Anschluss an ein Haushaltsstromnetz herzustellen,
wobei der Anschlussstecker (30) ein Stecker aus der Gruppe Stecker-Typ A (NEMA 1-15, 2-polig),), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) ist.

6. Verfahren zum Betrieb eines Steckersolargerätes (1) zur Einspeisung von elektrischer Leistung in ein Haushaltsstromnetz nach einem oder mehreren der vorhergehenden Ansprüche,
**dadurch gekennzeichnet, dass**
die Stromspeicher-Einheit (60) einen Stromspeicher (61) mit einer Speicherkapazität C mit C >2,5kWh, bevorzugt mit C > 3kWh und besonders bevorzugt mit C > 4 kWh aufweist,
wobei die Stromspeicher-Einheit (60) einen Regler (62) aufweist,
wobei der Regler (62) die von dem Stromspeicher (61) abgebbare elektrische Leistung regelt,
wobei die Stromspeicher-Einheit (60) einen Wandler (63) aufweist,
wobei der Wandler (63) die Stromstärke der von der Stromspeicher-Einheit (60) abgegebenen Stromleistung wandelt.

7. Verfahren zum Betrieb eines Steckersolargerätes (1) zur Einspeisung von elektrischer Leistung in ein Haushaltsstromnetz nach einem oder mehreren der vorhergehenden Ansprüche,
**dadurch gekennzeichnet, dass**
die durch das Steckersolargerät (1) in das Haushaltsstromnetz eingespeiste Stromleistung durch eine Steuerung (50) gesteuert wird,
wobei die Steuerung (50) mit dem Stromleistungsmessgerät (41) gekoppelt ist, wobei die Steuerung (50) die durch das Stromleistungsmessgerät (41) erfassten Daten mit weiterverarbeitet,
wobei die Steuerung (50) mit der Stromspeicher-Einheit (60) gekoppelt ist, wobei die Steuerung (50) die von der Stromspeicher-Einheit (60) abgebbare Stromleistung steuert.

8. Steckersolargerät (1) zur Einspeisung von elektrischer Leistung in ein Haushaltsstromnetz umfassend
• eine Photovoltaikeinheit (PV-Einheit, 10),
• einen Wechselrichter (20),
• einen Anschlussstecker (30),
• eine Stromleistungsmesseinheit (40) und
• eine Steuerung (50),
wobei die Stromleistungsmesseinheit (40) dafür vorgesehen und dafür geeignet ist, den gesamten Stromleistungsverbrauch und/oder den vollständigen Stromleistungsbedarf des Haushaltes zu ermitteln.

9. Steckersolargerät (1) zur Einspeisung von elektrischer Leistung in ein Haushaltsstromnetz nach Anspruch 8,
**dadurch gekennzeichnet, dass**
die Stromleistungsmesseinheit (40) ein Stromleistungsmessgerät (41, 42) aufweist,
wobei die Stromleistungsmesseinheit (40) mehrere Stromleistungsmessgeräte (41, 42) aufweist,
wobei die Stromleistungsmesseinheit (40) derart mit einem Haushaltsstromnetz koppelbar ist, dass mit einem Stromleistungsmessgerät (41, 42) der Stromleistungsmesseinheit (40) der vollständige Stromleistungsverbrauch des Haushaltes und/oder den vollständige Stromleistungsbedarf des Haushaltes erfassbar ist, wobei das Stromleistungsmessgerät (41,42) an einem Stromzähler (101) und/oder zwischen dem Stromzähler (101) und einer Sicherung (102) des Haushaltsstromnetzes zur Erfassung des Stromleistungsverbrauchs und/oder des Stromleistungsbedarfs des Haushaltsstromnetzes angeordnet ist.

10. Steckersolargerät (1) zur Einspeisung von elektrischer Leistung in ein Haushaltsstromnetz nach Anspruch 8 oder 9,
**dadurch gekennzeichnet, dass**
die Photovoltaikeinheit (10) eine Peak-Leistung pvP mit pvP > 1000W, bevorzugt mit pvP > 1600W und besonders bevorzugt mit pvP > 2000W aufweist, wobei die Photovoltaikeinheit (10) mehrere PV-Module (11, 12) aufweist.

11. Steckersolargerät (1) zur Einspeisung von elektrischer Leistung in ein Haushaltsstromnetz nach einem oder mehreren der Ansprüche 8 bis 10,
**dadurch gekennzeichnet, dass**
der Wechselrichter (20) eine Ausgangsleistung eP mit eP < 1000W bevorzugt eP < 800W besonders bevorzugt eP < 600W aufweist.

12. Steckersolargerät (1) zur Einspeisung von elektrischer Leistung in ein Haushaltsstromnetz nach einem oder mehreren der Ansprüche 8 bis 11,
**dadurch gekennzeichnet, dass**
der Anschlussstecker (30) geeignet ist, über eine Standardhaushaltssteckdose (100) einen direkten Anschluss an ein Haushaltsstromnetz herzustellen, wobei der Anschlussstecker (30) ein Stecker aus der Gruppe Stecker-Typ A (NEMA 1-15, 2-polig), Stecker-Typ B (NEMA 5-15, 3-polig), Stecker-Typ C (CEE 7/16) "Eurostecker", Stecker-Typ C (CEE 7/17) "Konturenstecker", Stecker-Typ D (BS 546, 5 A), Stecker-Typ E (CEE 7/5), Stecker-Typ F (CEE 7/4) "Schukostecker", Stecker-Typ E+F (CEE 7/7), Stecker-Typ G (BS 1363) "Commonwealth-Stecker", Stecker-Typ H (SI-32), Stecker-Typ I (AS 3112), Stecker-Typ J (SN 441011), Stecker-Typ K (DS 60884-2-D1), Stecker-Typ L (CEI 23-50), Stecker-Typ M (BS 546, 15 A), Stecker-Typ N (IEC 60906-1) ist.

13. Steckersolargerät (1) zur Einspeisung von elektrischer Leistung in ein Haushaltsstromnetz nach einem oder mehreren der Ansprüche 8 bis 12,
**dadurch gekennzeichnet, dass**
das Steckersolargerät (1) eine Stromspeicher-Einheit (60) aufweist,
wobei die Stromspeicher-Einheit (60) einen Stromspeicher (61) mit einer Speicherkapazität C mit C >2,5kWh, bevorzugt mit C > 3kWh und besonders bevorzugt mit C > 4 kWh aufweist,
wobei die Stromspeicher-Einheit (60) einen Regler (62) aufweist,
wobei mit dem Regler (62) die von der Stromspeicher-Einheit (60) abgebbare elektrische Leistung regelbar ist,
wobei die Stromspeicher-Einheit (60) einen Wandler (63) aufweist,
wobei durch den Wandler (63) die Stromstärke der von der Stromspeicher-Einheit (60) abgegebenen Stromleistung wandelbar ist.

14. Steckersolargerät (1) zur Einspeisung von elektrischer Leistung in ein Haushaltsstromnetz nach einem oder mehreren der Ansprüche 8 bis 13,
**dadurch gekennzeichnet, dass**
das Steckersolargerät (1) eine Steuerung (50) aufweist,
wobei die Steuerung (50) mit der Stromleistungsmesseinheit (40) gekoppelt ist,
wobei die durch die Stromleistungsmesseinheit (40) erfassten Daten mit der Steuerung (50) weiter verarbeitbar sind,
wobei die Steuerung (50) mit der Stromspeicher-Einheit (60) gekoppelt ist, wobei durch die Steuerung (50) die von der Stromspeicher-Einheit (60) abgebbare Stromleistung steuerbar ist.

15. Steckersolargerät (1) zur Einspeisung von elektrischer Leistung in ein Haushaltsstromnetz nach einem oder mehreren der Ansprüche 8 bis 14,
**dadurch gekennzeichnet, dass**
das Steckersolargerät (1) dafür geeignet und dafür vorgesehen ist eine Stromleistung in das haushaltsstromnetz einzuspeisen, die über dem aktuellen gesamten Stromleistungsverbrauch und/oder dem aktuellen vollständigen Stromleistungsbedarf des Haushaltes liegt.
